# FASCICULE DE BREVET EUROPEEN

(11) **EP 2 556 646 B1**
(45) Date de publication et mention de la délivrance du brevet: **21.12.2016**
(21) Numéro de dépôt: 11719332.6
(22) Date de dépôt: 05.04.2011
(51) Int. Cl.: H04L 29/06, H04N 7/173

(54) **TECHNIQUE DE CONTRÔLE D'ACCÈS A UN FLUX DE DONNÉES DIFFUSÉ**
VERFAHREN ZUM ZUGRIFF AUF EINEM AUSGESTRAHLTEN DATENFLUSSES
METHOD OF ACCESSING A BROADCAST DATA FLOW

(30) Priorité: 09.04.2010 FR 1052704
(43) Date de publication de la demande: 13.02.2013
(73) Titulaire: Orange, 75015 Paris (FR)
(72) Inventeur: HENNEQUIN, Jean-Baptiste, F-92320 Chatillon (FR)
(86) Numéro de dépôt international: PCT/FR2011/050755
(87) Numéro de publication internationale: WO 2011/124834

(56) Documents cités:
- US-A1- 2005 220 132
- US-B2- 7 644 429

## Description

L'invention se situe dans le domaine des télécommunications et plus particulièrement dans celui de la télévision dans un réseau de type IP (« Internet Protocol »).

L'invention trouve une application particulièrement avantageuse dans le domaine des réseaux IP permettant la diffusion de données audiovisuelles, notamment lors d'un accès à un service de diffusion de contenu en mode multicast suivant les mécanismes définis dans le domaine de l'IMS (« IP Multimedia Subsystem ») par les organismes de normalisation 3GPP (« 3rd Generation Partnership Project ») et TISPAN (« Telecommunications and Internet converged Services and Protocols for Advanced Networking »).

Le document US 2005/0220132 présente un système dans un réseau de paquets de données contrôlant l'accès à des flux diffusés, pour traiter une demande d'un utilisateur ayant demandé un flux non autorisé.

L'IMS est une architecture de réseau qui permet un établissement et un contrôle d'une session multimédia ainsi qu'une réservation des ressources au niveau du réseau de transport des flux médias. Cette architecture de réseau permet également la mise en oeuvre d'une interaction entre des services.

Plus précisément, les spécifications techniques ETSI TS 182 027 et TS 183 063 définies par le groupe TISPAN décrivent les architectures IPTV sur une architecture IMS et des mécanismes permettant à un terminal d'un utilisateur d'accéder à un service de diffusion de contenus en mode multicast, par exemple « TV Broadcast ». Pour un flux de données est définie une adresse de diffusion ou adresse multicast qui permet ainsi à un utilisateur de recevoir le flux diffusé. Lors de l'initialisation d'une session pour le service de « TV Broadcast », une plateforme de service mettant en oeuvre ce service vérifie si l'utilisateur a le droit d'accéder au service, puis restreint ce droit d'accès à une liste de flux de données en fonction de son abonnement. Le terminal de l'utilisateur obtient alors de la plateforme de service une liste d'adresses de diffusion ou adresses multicast respectivement associées aux flux de données de la liste.

Au cours de l'initialisation de cette session dans une architecture IMS, un contrôleur de sessions mandataire ou « proxy » P-CSCF, pour «Proxy Call Session Control Function », est en charge de l'émission d'une demande de ressources à destination d'un sous-système de commande de ressource ou RACS, pour «Resource and Admission Control Subsystem », afin de mettre en oeuvre une fonction de contrôle d'admission et/ou de commande de ressources. Un tel sous-système est spécifié par le groupe TISPAN dans le document ETSI ES 282 003. Ce sous-système de commande de ressource RACS va évaluer la demande de ressource transmise par le P-CSCF et est apte à configurer un équipement dans le plan de transfert. Un tel équipement est en charge de diffuser les flux de données aux utilisateurs l'ayant demandé.

La demande de ressources entre le contrôleur de session P-CSCF et le sous-système RACS peut comprendre une description de la liste des adresses multicast autorisées pour l'utilisateur.

La commande entre le sous-système RACS et l'équipement du plan de transfert peut comprendre la description d'un filtre à installer sur l'équipement du plan de transfert. Ce filtre, composé de règles de filtrage multicast, définit des adresses multicast auxquelles le terminal de l'utilisateur a le droit d'accéder. Dans un autre mode de réalisation, le filtre comprend des adresses multicast auxquelles le terminal de l'utilisateur n'a pas le droit d'accéder. L'équipement du plan de transfert est alors en charge du traitement des demandes d'accès à des adresses multicast émises par l'utilisateur par l'intermédiaire du protocole de signalisation multicast, tel que IGMP (« Internet Group Management Protocol »), et peut ainsi accepter ou refuser les demandes d'accès en fonction des règles du filtre installé.

Toutefois, la mise en oeuvre du sous-système RACS nécessite la mise en place d'une nouvelle fonction dans le réseau mais également la mise à jour ou le remplacement des équipements du plan de transfert afin qu'ils puissent être commandés et configurés depuis le sous-système RACS. L'impact de la mise en oeuvre d'un tel service de « TV Broadcast » sur le réseau d'un opérateur est donc important.

Un des buts de l'invention est de remédier à des insuffisances/inconvénients de l'état de la technique et/ou d'y apporter des améliorations.

Selon un premier aspect, l'invention a pour objet un procédé de contrôle d'accès par un utilisateur à un flux de données diffusé dans un réseau de communication, ledit procédé comprenant les étapes suivantes mises en oeuvre par un dispositif d'accès par l'intermédiaire duquel l'utilisateur accède au réseau :
- obtention d'un ensemble de flux de données autorisés à partir d'un message reçu par le dispositif d'accès et à destination de l'utilisateur, ledit message étant relatif à une session applicative entre l'utilisateur et une plateforme de service ;
- réception d'une demande d'accès de l'utilisateur audit flux de données ;
- vérification que le flux n'appartient pas à l'ensemble de flux de données autorisés obtenu pour ledit utilisateur ;
- rejet de la demande d'accès.

Ainsi, le dispositif d'accès au réseau est lui-même en charge de mettre en oeuvre le contrôle d'accès à des flux de données diffusés. Il est aisé d'intégrer une telle fonction dans le dispositif d'accès au réseau et la mise à niveau peut être réalisée par téléchargement d'une nouvelle version logicielle.

Un tel dispositif d'accès au réseau est par exemple une passerelle résidentielle. Il permet l'accès à un réseau de communication à un ensemble de terminaux utilisateurs situés dans un réseau domestique.

Le procédé de contrôle d'accès tire parti de l'emplacement privilégié du dispositif d'accès au réseau et des fonctions qu'il met en oeuvre. En effet, dans un mode particulier de réalisation, le dispositif d'accès au réseau met en oeuvre une fonction d'agent pour la signalisation relative à la session, par exemple selon le protocole SIP, pour « Session Initiation Protocol », en charge du relais de la signalisation SIP et des sessions établies avec des plateformes de service du réseau, et une fonction mandataire ou « proxy » pour le protocole de signalisation multicast, IGMP ou MLD, pour « Multicast Listener Discovery », en charge du relais de la signalisation conforme au protocole de signalisation multicast en provenance ou à destination du terminal de l'utilisateur. Ainsi, le dispositif d'accès au réseau peut obtenir de la signalisation relative à la session un ensemble ou une liste de flux de données diffusés autorisés pour un utilisateur et ensuite mettre en oeuvre le contrôle d'accès au niveau de la fonction mandataire pour le protocole de signalisation multicast. La signalisation relative à la session applicative peut correspondre à une ouverture de session, à une modification de cette dernière. Il peut s'agir de messages relatifs à la session applicative selon différents protocoles, tels que SIP ou bien http, pour « HyperText Transfer Protocol ». Ainsi, le procédé de contrôle d'accès selon l'invention ne requiert pas de commande du dispositif d'accès au réseau par un des équipements du réseau. Il est complètement autonome pour obtenir les informations de contrôle d'accès, puis mettre en oeuvre ce contrôle d'accès. Grâce au procédé de contrôle d'accès décrit précédemment, il est possible de déporter le contrôle d'accès vers le dispositif d'accès au réseau et ainsi d'éviter des mises à niveaux des équipements dans le plan de transfert.

Le rejet de la demande d'accès peut être explicite, c'est-à-dire avec notification de l'utilisateur, ou bien implicite. Lorsque la demande d'accès est rejetée, elle est bloquée par le dispositif de contrôle d'accès et n'est donc pas propagée vers le réseau de communication. Le flux de données non autorisé n'est pas transmis à destination du terminal de l'utilisateur, puisque la demande d'accès a été bloquée.

Les demandes d'accès à des flux autorisés pour l'utilisateur sont quant à elles transmises dans le réseau de communication et la transmission du flux de données autorisé est effectuée par le premier équipement du plan de transfert, apte à traiter la demande d'accès.

On note ici que le procédé de contrôle d'accès est compatible avec des mécanismes d'embrouillage des flux de données. Dans de tels mécanismes, les flux de données, même ceux non autorisés, sont acheminés jusqu'au terminal de l'utilisateur. Toutefois, ceux-ci ne peuvent être restitués en clair par le terminal de l'utilisateur en l'absence d'une possession d'une clé d'embrouillage. Leur acheminement jusqu'au terminal de l'utilisateur entraîne alors une charge inutile du réseau. De plus, un utilisateur mal intentionné peut également enregistrer le flux de données non autorisé pour tenter ultérieurement de déterminer la clé d'embrouillage et ainsi de le restituer en clair. Le procédé de contrôle d'accès tel que décrit précédemment permet ainsi de limiter la charge des liens vers la passerelle d'accès au réseau et de renforcer la protection des flux de données diffusés.

De plus, le procédé de contrôle d'accès est compatible avec les mécanismes existants pour le service «TV Broadcast », aussi bien au niveau de l'établissement et du contrôle des sessions relatives au service, qu'à celui du protocole de signalisation multicast.

L'ensemble de flux de données autorisés est par exemple obtenu à partir d'un message d'accord d'ouverture de la session applicative, d'un message d'accord de modification de la session applicative. Dans un premier mode de réalisation, l'ensemble de flux de données autorisés est extrait du message. Dans un deuxième mode de réalisation, l'ensemble de flux de données autorisés est déduit d'un ensemble de flux de données interdit, extrait du message d'accord d'ouverture de la session applicative.

Selon une caractéristique particulière, le procédé de contrôle d'accès comprend en outre une étape d'enregistrement dans un tableau dudit ensemble obtenu en association avec l'utilisateur.

L'ensemble des flux de données autorisés est enregistré en association avec un identifiant de l'utilisateur pour permettre de traiter des demandes d'accès ultérieures de cet utilisateur.

L'identifiant de l'utilisateur peut être composé d'un identifiant public IMS, IMPU pour « IP Multimedia Public Identity », et/ou de l'adresse IP du terminal de l'utilisateur.

Selon une autre caractéristique particulière, le procédé de contrôle d'accès comprend en outre, sur réception d'un message de relâche de la session applicative, une étape de suppression du tableau de l'enregistrement associé à l'utilisateur.

Après relâche de la session applicative, l'ensemble des flux de données autorisés est supprimé afin d'éviter des accès à des flux de données en dehors d'une session applicative établie.

Selon une autre caractéristique particulière, le procédé de contrôle d'accès comprend en outre les étapes suivantes :
- réception d'une demande d'arrêt de diffusion d'un flux de données ;
- vérification que le flux n'appartient pas à l'ensemble de flux de données autorisés obtenu pour ledit utilisateur ;
- rejet de la demande d'arrêt.

Ainsi, on évite de transmettre vers le réseau de communication des demandes d'arrêt non justifiées.

Selon un deuxième aspect, l'invention concerne un dispositif d'accès par un utilisateur à un flux de données diffusé dans un réseau de communication, agencé pour permettre un accès de l'utilisateur au réseau :
- des moyens d'obtention d'un ensemble de flux de données autorisés à partir d'un message reçu par le dispositif d'accès et à destination de l'utilisateur, ledit message étant relatif à une session applicative entre l'utilisateur et une plateforme de service ;
- des moyens de réception d'une demande d'accès de l'utilisateur audit flux de données ;
- des moyens de traitement de la demande d'accès, agencés pour rejeter la demande d'accès lorsque le flux n'appartient pas à l'ensemble de flux de données autorisés pour ledit utilisateur.

Selon un troisième aspect, l'invention concerne une passerelle d'accès à un réseau de communication pour au moins un utilisateur, comprenant un premier module, agencé pour relayer des messages relatifs à la session applicative, et un deuxième module, agencé pour relayer des messages relatifs à un protocole de signalisation multicast, dans laquelle :
- le premier module est en outre agencé pour obtenir un ensemble de flux de données autorisés à partir d'un message reçu par le dispositif d'accès et à destination de l'utilisateur, ledit message étant relatif à une session applicative entre l'utilisateur et une plateforme de service ;
- le deuxième module est en outre agencé pour recevoir une demande d'accès de l'utilisateur à un flux de données diffusé dans le réseau, pour vérifier que le flux n'appartient pas à l'ensemble de flux de données autorisés pour ledit utilisateur et pour rejeter la demande d'accès.

Selon un quatrième aspect, l'invention concerne un système d'accès à un flux de données diffusé, comprenant un dispositif d'accès par un utilisateur à un flux de données diffusé tel que décrit précédemment et au moins un équipement du réseau, agencé pour diffuser ledit flux de données.

Selon un cinquième aspect, l'invention concerne également un programme d'ordinateur comportant des instructions pour la mise en oeuvre du procédé de contrôle d'accès tel que décrit précédemment, mises en oeuvre par un dispositif d'accès, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente un dispositif d'accès à un réseau de communication dans son environnement selon un mode particulier de réalisation de l'invention ;
- la figure 2 représente un schéma simplifié des étapes du procédé de contrôle d'accès lors d'un établissement d'une session applicative selon un mode particulier de réalisation de l'invention ;
- la figure 3 représente un schéma simplifié des étapes du procédé de contrôle d'accès lors d'un changement de flux de données selon un mode particulier de réalisation de l'invention ;
- la figure 4 représente un schéma simplifié des étapes du procédé de contrôle d'accès lors d'une relâche de la session applicative selon un mode particulier de réalisation de l'invention ;
- la figure 5 représente un dispositif d'accès à un réseau de communication selon un mode particulier de réalisation de l'invention.

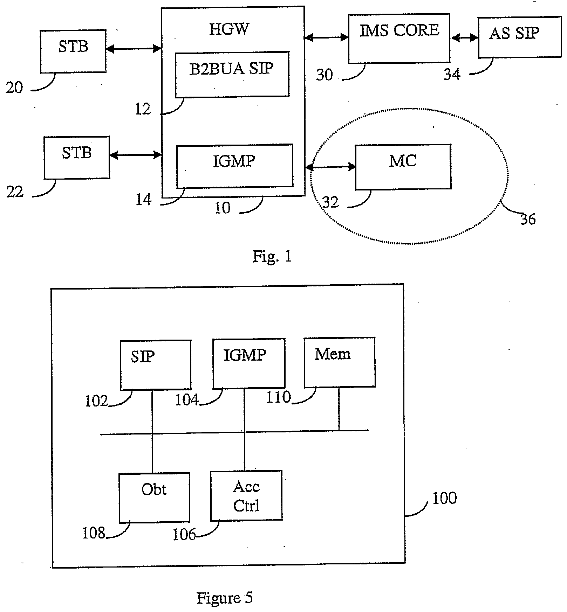

Un dispositif d'accès à un réseau de communication 10 dans son environnement va être décrit en relation avec la figure 1 selon un mode particulier de réalisation.

Le dispositif d'accès au réseau 10 permet l'accès au réseau de communication à des terminaux utilisateurs 20, 22 d'un réseau local, domestique ou privé. Plus précisément, on se place par la suite dans le cas où ce dispositif d'accès au réseau de communication est une passerelle résidentielle. Les terminaux utilisateurs 20, 22 sont également connus sous la dénomination « STB », pour « Set Top Box ». Ils disposent de fonctions permettant l'initialisation et la gestion des services IPTV sur une architecture de type IMS. A ce titre, ces terminaux sont identifiés comme étant les demandeurs ou utilisateurs lors de l'accès à un flux de données diffusé ou multicast. Un tel flux de données diffusé est appelé par la suite « flux multicast ».

Par la suite, la description est faite pour un mode de réalisation utilisant le protocole de signalisation multicast IGMP. Ce protocole est plus précisément décrit dans les documents de l'IETF, (RFC 1112, RFC 2236 et RFC 3376. Aucune limitation n'est attachée à l'utilisation de ce protocole. Par exemple, la description est aisément transposable à d'autres protocoles multicast, tel que le protocole MLD, pour « Multicast Listener Discovery », qui est l'équivalent du protocole IGMP pour un réseau de communication de type IPv6. Il existe deux versions du protocole MLD : MLDv1 équivalent à IGMPv2 en termes de fonctionnalités et décrit dans le document de l'IETF RFC 2710, et MLDv2 équivalent à IGMPv3 en terme de fonctionnalités et décrit dans le document de l'IETF RFC 3810.

La passerelle 10 ou HGW, pour « Home GateWay », également appelée « passerelle résidentielle » ou « Box », sépare le réseau local du réseau de communication de l'opérateur. Elle fournit aux terminaux utilisateurs la connectivité IP au réseau de communication. La passerelle 10 comprend deux fonctions ou entités logiques 12, 14 :
- une première entité 12 mettant en oeuvre une fonction d'agent SIP ou « B2BUA SIP », pour « Back to Back User Agent SIP ». Cette première entité 12 prend en charge la signalisation SIP et le traitement des sessions correspondantes. Elle a ainsi une fonction de relais pour la signalisation SIP. La première entité 12 est ainsi en charge de gérer de manière transparente deux dialogues SIP, un premier avec un terminal utilisateur IPTV sur le réseau local et un deuxième avec une plateforme de service SIP dans le réseau de communication.
- une deuxième entité 14 mandataire pour le protocole de signalisation multicast, « IGMP snooping/proxy ». Cette deuxième entité 14 prend en charge la signalisation IGMP en provenance ou à destination du terminal utilisateur 20, 22. La fonction « IGMP snooping », tel que définie dans le document de l'IETF RFC4541, est en charge de la réplication des flux multicast vers les terminaux utilisateurs du réseau local. La fonction « IGMP proxy », telle que définie dans le document de l'IETF RFC4605, est en charge du relais des messages de signalisation multicast IGMP en provenance des terminaux utilisateurs du réseau local vers le réseau de communication et réciproquement.

La première entité 12 de la passerelle 10 communique avec un réseau coeur IMS 30 et une plateforme de service ou serveur applicatif 34 proposant un service « TV Broadcast ». Le réseau coeur IMS 30 comprend un ensemble de serveurs mandataires CSCF en charge de l'acheminement des messages de signalisation SIP entre utilisateurs ou entre un utilisateur et les plateformes de services.

Le réseau coeur IMS 30 s'appuie sur un plan de transfert IP 36. Un tel plan de transfert 36 comprend des équipements de transfert 32, disposant de fonctions d'acheminement multicast, permettant de mettre en oeuvre la réplication et la diffusion de flux de données diffusés, correspondant par exemple à des chaines de télévision, suite à des demandes d'accès des utilisateurs.

Dans le plan de transfert 36, les paquets d'un flux multicast sont diffusés en utilisant une adresse IP de destination particulière, dite « adresse multicast ». Un flux multicast est caractérisé par une adresse source et par une adresse de groupe. Chaque flux multicast est ainsi représenté par un couple (S, G) unique. Deux flux multicast distincts peuvent avoir la même adresse source S ou la même adresse de groupe G.

Le flux multicast est transmis à au moins un terminal utilisateur suite à la réception en provenance de celui-ci d'un message de type « Membership report » précisant l'adresse source et l'adresse de groupe. Le premier équipement 32 du plan de transfert 36 capable d'interpréter ce message transmet le flux multicast requis sur le lien d'où provient la requête. Une demande de flux multicast peut également se rapporter à un ensemble de sources pour un groupe donné. On parle alors de flux (*, G) correspondant à une somme des flux émis par différentes sources sur un même groupe G.

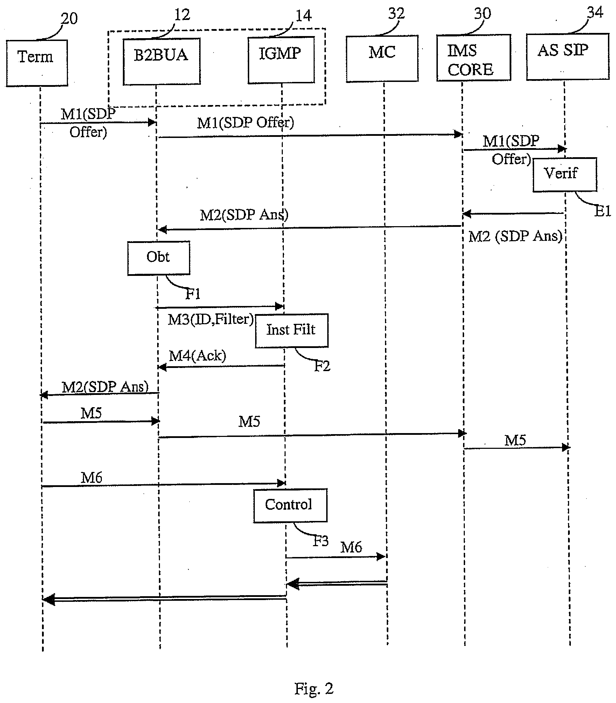

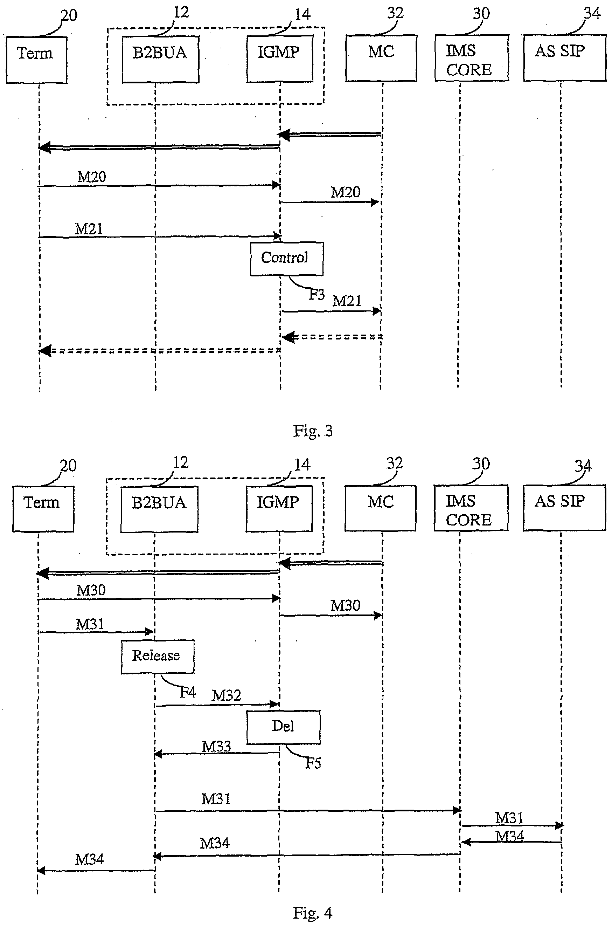

Le procédé de contrôle d'accès à un flux de données diffusé va maintenant être décrit en relation avec la figure 2, représentant une phase d'établissement d'une session applicative pour un accès à un service « TV Broadcast », la figure 3, représentant une phase de changement de chaîne TV et la figure 4, représentant une phase de relâche de la session applicative d'accès au service «TV Broadcast », La description est réalisée en utilisant les mécanismes IPTV IMS tels que décrits par les spécifications de l'ETSI TISPAN à titre illustratif.

En référence à la figure 2, le terminal utilisateur 20 transmet un message M1 de demande d'ouverture d'une session applicative relative au service «TV Broadcast» à la passerelle 10. Il s'agit d'une demande d'ouverture de session SIP INVITE contenant notamment un premier identifiant de l'utilisateur, appelé identifiant public IMS, IMPU pour « IP Multimedia Public Identity », et des informations sur les bouquets de chaines TV auxquels le terminal utilisateur 20 souhaite avoir accès, sous la forme d'une offre de description de la session ou « SDP Offer », pour « Session Description Protocol ».

A titre d'exemple, une offre de description de la session « SDP offer » transporté par le message M1 émis par le terminal comprend les attributs suivants :
*v*=0
*o*=- *3434047299 0 IN IP4 10.170.15.105*
*s=BC initiation*
*i=this is a typical initial BC SIP SDP INVITE!*
*t=00*
*m=video 9692 RTP*/*AVP 33*
*c=IN IP4 224.0.70.102*
*b=AS:8000*
*a=bc_service:sip:ch2@orange.com ;* L'utilisateur indique par cet attribut quelle chaine il souhaite accéder en premier
*a=bc_service_package:1 ;* L'utilisateur indique par cet attribut qu'il souhaite accéder au bouquet de service TV n°1
*a=recvonly*

Le message M1 est reçu par la première entité 12 de la passerelle 10 et est relayé à destination du réseau coeur IMS 30, puis du serveur applicatif 34, ce dernier contenant la logique du service demandé par le terminal utilisateur.

Dans une étape E1, le serveur applicatif 34 réalise les vérifications suivantes :
- accès autorisé ou non au service de « TV Broadcast » pour cet utilisateur :
- accès autorisé ou non aux bouquets de chaînes de télévision demandés en fonction de l'abonnement de cet utilisateur.

En fonction des résultats de ces vérifications, le serveur d'application 24 accepte ou refuse l'initialisation de la session. En cas d'accord, un message de réponse M2, par exemple un message SIP 2000K, comprenant notamment le premier identifiant de l'utilisateur IMPU et, sous la forme d'une réponse de description de session ou « SDP answer », un ensemble ou une liste des bouquets de chaines TV autorisés et pour chaque chaîne autorisée de l'ensemble ou de la liste, un identifiant de la chaîne et l'adresse IP multicast. Ce message de réponse M2 à destination du terminal IPTV de l'utilisateur est transmis à travers le réseau coeur IMS 30, puis la passerelle 10. Le message de réponse M2 est ainsi reçu par la passerelle 10.

Dans une étape F1, l'entité mandataire SIP 12 détermine que le message de réponse M2 correspond à un accord d'ouverture de la session.

A titre d'exemple, la réponse de description de session « SDP answer » transporté par le message M2 SIP 2000K émis par le serveur d'application 34 en réponse au message M1 SIP INVITE comprend les attributs suivants :
*v*=*0*
*o*=- *3434047299 0 IN IP4 10.170.15.105*
*s=BC initiation*
*i=this is* a *typical initial BC SIP SDP INVITE*
*t=0 0*
*m=video 9692 RTP*/*AVP* 33
*c=IN IP4 224.0.70.102*/*127*
*b=AS:8000*
*a=recvonly*
*a=bc_service:sip:ch2@orange.com*
*a=bc_service_package:1 mult_list:224.0.70.101*|*224.0.70.102 sip:ch.1@orange.com,sip:ch2@orange.com.*

Par ce dernier attribut, le serveur d'application 34 confirme que l'utilisateur peut accéder au bouquet de service TV n°1 et donne la liste des adresses IP multicast, c'est-à-dire les adresses 224.0.70.101 et 224.0.70.102 dans l'exemple ci-dessus, et les identifiants de chaines correspondants, c'est-à-dire ch1@orange.com et ch2@orange.com toujours dans l'exemple ci-dessus.

Toujours de cette étape F1, l'entité mandataire SIP 12 obtient à partir du message de réponse M2 le premier identifiant de l'utilisateur, la liste des bouquets de chaînes TV autorisés ainsi que les identifiants de chaînes et leurs adresses IP multicast respectives. Plus précisément, l'entité mandataire SIP 12 les extrait du message de réponse M2. L'entité mandataire SIP 12 retransmet également le message de réponse M2 à destination du terminal de l'utilisateur 20. L'entité mandataire SIP 12 extrait également du message de réponse M2, plus précisément de l'entête IP du paquet portant le message de réponse M2, un deuxième identifiant de l'utilisateur.

Les éléments obtenus à partir du paquet portant le message de réponse M2 se composent ainsi d'identifiants de l'utilisateur et de la liste des adresses IP multicast autorisées. Ces éléments extraits sont transmis à l'entité mandataire pour le protocole de signalisation multicast 14, « IGMP snooping /proxy », de la passerelle 10 par exemple sous la forme d'un message M3 à l'aide d'une interface de programmation API, pour « Application Programming Interface ». Un tel message M3 comprend les identifiants de l'utilisateur et la liste des adresses IP multicast autorisées sous la forme de filtres.

Le deuxième identifiant de l'utilisateur est par exemple l'adresse IP du terminal de l'utilisateur. On souligne ici, que lorsque la passerelle 10 met en oeuvre une fonction de translation d'adresse ou NAT, c'est-à-dire une association entre une adresse IP privée utilisée dans le réseau privé et une adresse IP publique mémorisée dans une table de translation, le deuxième identifiant ne correspond pas directement à l'adresse IP extraite du paquet portant le message de réponse mais à l'adresse privée lue dans la table de translation.

Dans une étape F2, l'entité mandataire pour le protocole de signalisation multicast 14 reçoit ce message M3 et enregistre alors dans un tableau la liste d'adresses IP multicast autorisées, auxquelles le terminal 20 est susceptible de demander un accès à l'aide de messages protocolaires multicast, en association avec les identifiants de l'utilisateur.

Grâce à cette collaboration entre l'entité mandataire SIP 12 et l'entité mandataire pour le protocole de signalisation multicast 14, cette dernière est en mesure d'effectuer un contrôle d'accès par le terminal 20 aux chaînes TV. Le contrôle d'accès est ainsi déporté de l'équipement de transfert 32 vers la passerelle 10, et plus précisément son entité mandataire pour le protocole de signalisation multicast 14. On évite ainsi des mises à jour importantes des équipements de transfert.

On note que les informations d'autorisation d'accès sont extraites de messages transmis par le réseau de communication lors de la négociation de session applicative et sont donc fiables.

De plus, la passerelle 10 effectue ce contrôle d'accès sur un nombre restreint d'utilisateurs, ce qui ne complexifie pas le logiciel de la passerelle.

Puis, l'entité mandataire pour le protocole de signalisation multicast 14 acquitte par un message d'acquittement M4 la réception du message M3.

Ces différents échanges sont répétés dès qu'un autre terminal 22 demande l'établissement d'une session «TV Broadcast» et conduisent ainsi à un nouvel enregistrement dans le tableau associant cet autre terminal 22 aux droits obtenus par celui-ci pour le service de «TV Broadcast ». Ces droits peuvent être différents en fonction des terminaux du réseau domestique.

Sur réception du message M2 de réponse, le terminal de l'utilisateur 20 transmet à la passerelle 10, plus précisément à l'entité mandataire SIP 12, un message M5 d'acquittement SIP ou «SIP ack ». Ce message M5 est alors relayé au réseau coeur IMS 30 puis au serveur d'application 34.

L'établissement d'une session applicative «TV Broadcast» entre le terminal utilisateur 20 et le serveur applicatif 34 est alors terminé.

On se place maintenant dans le cas où le terminal de l'utilisateur 20 demande un accès à une chaîne télévisuelle.

Le terminal de l'utilisateur 20 transmet à la passerelle 10, plus précisément à l'entité mandataire pour le protocole de signalisation multicast 14, un message M6 conforme au protocole de signalisation multicast, par exemple un message « IGMP Report(S,G1) » du type Membership Report, comprenant notamment un identifiant de l'utilisateur et une demande d'accès à une chaine TV, d'adresse IP multicast G1. A titre d'exemple, le terminal de l'utilisateur 20 demande un accès à la chaîne ch1@orange.com, identifiée par l'adresse IP multicast 224.0.70.101.

Ce message de demande d'accès M6 est reçu par l'entité mandataire pour le protocole de signalisation multicast 14 dans une étape F3. Toujours dans cette étape F3, l'entité mandataire pour le protocole de signalisation multicast 14 contrôle si le terminal de l'utilisateur 20 a bien le droit d'accéder à la chaîne demandée. Le contrôle se base d'une part sur l'identifiant du terminal demandeur compris dans le message de demande d'accès M6 pour obtenir la liste des adresses IP multicast autorisées et d'autre part sur l'adresse IP multicast contenue dans ce même message pour effectuer le contrôle d'accès.

Dans un mode de réalisation particulier, le message de demande d'accès M6 comprend le deuxième identifiant de l'utilisateur, c'est-à-dire l'adresse IP du terminal. Dans un autre mode de réalisation particulier, le message M6 comprend un troisième identifiant de l'utilisateur, par exemple une adresse MAC, pour « Media Access Control ». Dans cet autre mode de réalisation, la passerelle 10 détermine quel deuxième identifiant est associé à ce troisième identifiant avant d'obtenir la liste des adresses IP multicast autorisées. On comprend ainsi que le procédé tel que décrit est aisément adaptable à d'autres types d'identifiants de l'utilisateur.

Si le terminal de l'utilisateur 20 a le droit d'accéder à la chaîne TV demandée, alors le message de demande d'accès M6 est transmis au réseau de communication, plus précisément à l'équipement de transfert 32. Le flux de données associé à la chaîne TV est alors transmis au terminal de l'utilisateur 20.

Si le terminal de l'utilisateur 20 n'a pas le droit d'accéder à la chaîne TV demandée, alors le message de demande d'accès M6 est bloqué par l'entité mandataire pour le protocole de signalisation multicast 14. Aucun message de demande d'accès n'est transmis au réseau de communication. Le flux de données associé à la chaîne TV n'est donc pas transmis au terminal de l'utilisateur. Dans une variante de réalisation, le terminal de l'utilisateur 20 est notifié du rejet.

Ainsi, la passerelle 10 met en place un contrôle d'accès à des chaînes TV pour un terminal d'utilisateur 20 ayant établi une session applicative avec le serveur applicatif 34.

Le changement de chaîne ou « zapping » va maintenant être décrit en relation avec la figure 3. On se place ici dans le cas où la session « TV Broadcast » est toujours établie et une première chaîne TV, d'adresse IP multicast G1, est en cours de réception par le terminal de l'utilisateur.

Lorsque l'utilisateur décide de changer de chaîne TV, le terminal de l'utilisateur 20 transmet un message M20 correspondant à une demande d'arrêt de la première chaîne TV, par exemple un message « IGMP Leave (S, G1) ». Le message M20 est relayé par l'entité mandataire pour le protocole de signalisation multicast 14 vers l'équipement du plan de transfert 32. La transmission du flux de données associé à la première chaîne TV vers le terminal de l'utilisateur est alors arrêtée. En variante à ce mode de réalisation, l'entité mandataire pour le protocole de signalisation multicast 14 obtient du message M20 le deuxième identifiant de l'utilisateur et vérifie que la chaîne TV pour laquelle un arrêt est demandé correspond bien à une chaîne autorisée pour cet utilisateur. Si tel n'est pas le cas, la demande d'arrêt n'est pas relayée. On évite ainsi l'envoi d'une demande d'arrêt non justifiée vers l'équipement de transfert 32.

Puis, le terminal de l'utilisateur 20 transmet à la passerelle 10, plus précisément à l'entité mandataire pour le protocole de signalisation multicast 14, un message M21, correspondant à une demande d'accès à une deuxième chaîne, par exemple par un message « IGMP Report(S,G2) ». L'entité mandataire pour le protocole de signalisation multicast 14 met de nouveau en oeuvre l'étape F2 décrite précédemment.

Si la deuxième chaine TV demandée est autorisée, le message de demande d'accès M21 est transmis au réseau de communication et le flux de données associé à la deuxième chaîne TV est transmis vers le terminal de l'utilisateur 20. Dans le cas contraire, le message de demande d'accès M21 est bloqué et le flux de données associé à la deuxième chaîne TV n'est pas transmis. Dans la variante de réalisation, le terminal de l'utilisateur 20 est notifié du rejet.

La relâche de la session applicative « TV Broadcast » va maintenant être décrite en relation avec la figure 4. On se place ici dans le cas où la session applicative « TV Broadcast » est toujours établie et une chaîne TV, par exemple la première chaîne TV, d'adresse IP multicast G1, est en cours de réception par le terminal de l'utilisateur.

Lorsque l'utilisateur décide de quitter le service « TV Broadcast », le terminal de l'utilisateur 20 transmet un message M30 correspondant à une demande d'arrêt de diffusion de la première chaîne TV, par exemple un message « IGMP Leave (S, G1) ». Le message M30 est relayé par l'entité mandataire pour le protocole de signalisation multicast 14 vers l'équipement de transfert 32. La transmission du flux de données associé à la première chaîne TV vers le terminal de l'utilisateur 20 est alors arrêtée. De même que décrit précédemment, l'entité mandataire pour le protocole de signalisation multicast 14 peut mettre en oeuvre le contrôle d'accès sur cette demande d'arrêt.

Puis, le terminal de l'utilisateur 20 transmet à la passerelle 10, plus précisément à l'entité mandataire SIP 12, un message M31 de relâche de la session, par exemple « SIP Bye ».

Dans une étape F4, l'entité mandataire SIP 12 détermine qu'il s'agit d'un message de relâche de session et extrait du message M31 de relâche de session le premier identifiant de l'utilisateur. L'entité mandataire SIP 12 extrait également le deuxième identifiant de l'utilisateur de l'entête IP du paquet portant le message M31. Elle transmet ensuite les identifiants de l'utilisateur à l'entité mandataire pour le protocole de signalisation multicast 14, « IGMP snooping /proxy », de la passerelle 10 par exemple sous la forme d'un message M32 à l'aide de l'interface de programmation API, ce message M32 requérant la désinstallation des filtres multicast pour cet utilisateur.

Dans une étape F5, l'entité mandataire pour le protocole de signalisation multicast 14 reçoit ce message M32 et supprime alors du tableau la liste d'adresses IP multicast associée à l'utilisateur du terminal 20.

De ce fait, l'utilisateur qui demande à accéder à une chaîne TV depuis son terminal en émettant un message «IGMP report» ne peut avoir accès à cette chaîne puisque aucune autorisation valide n'est configurée dans l'entité mandataire pour le protocole de signalisation multicast 14.

L'entité mandataire pour le protocole de signalisation multicast 14 acquitte par un message d'acquittement M33 la réception du message M32.

L'entité mandataire SIP 12 relaie le message M31 au réseau coeur IMS 30, qui le transmet au serveur d'application 34.

Le serveur d'application 34 répond au terminal de l'utilisateur 20 par un message M34 d'acquittement, par exemple un message « SIP 2000K », par l'intermédiaire du réseau coeur IMS 30, puis de la passerelle 10, plus précisément de l'entité mandataire SIP 12.

On comprend que ces différents mécanismes sont de nouveau mis en oeuvre lors de modifications apportées aux droits de l'utilisateur en cours de session. Ces modifications peuvent être aussi bien à l'initiative du serveur applicatif 34 que de l'utilisateur lui-même. Ceci se traduit par la transmission d'une nouvelle liste de chaînes autorisées dans un message d'accord, par exemple en réponse à un nouveau message « SIP-Invite ». La nouvelle liste de chaînes autorisées est mémorisée comme décrit précédemment en association avec l'utilisateur. Ainsi, la liste de chaînes autorisées est obtenue à partir d'un message relatif à une session applicative entre l'utilisateur et une plateforme de service.

Un dispositif 100 d'accès par un utilisateur à un flux de données diffusé dans un réseau de communication va maintenant être décrit en relation avec la figure 5. Un tel dispositif est notamment agencé pour permettre un accès de l'utilisateur au réseau de communication.

Un tel dispositif comprend :
- un module 102 agencé pour relayer des messages de signalisation relatifs à une session applicative avec un serveur applicatif 34, notamment des messages relatifs à l'établissement, la modification et la relâche d'une session applicative ;
- un module 108 d'obtention d'un ensemble de flux de données autorisés à partir d'un message reçu par le dispositif d'accès et à destination de l'utilisateur, ledit message étant relatif à une session applicative entre l'utilisateur et une plateforme de service ;
- un tableau 110 mémorisant un ensemble de flux de données autorisés en association avec un utilisateur ;
- un module 104 agencé pour relayer la signalisation multicast, notamment une demande d'accès d'un utilisateur à un flux de données diffusé, une demande d'arrêt de diffusion d'un flux de données diffusé ;
- un module 106 de traitement d'une demande d'accès, agencé pour ne pas autoriser la demande d'accès lorsque le flux n'appartient pas à l'ensemble de flux de données autorisés pour ledit utilisateur et pour autoriser la transmission au réseau de communication de la demande d'accès dans le cas contraire.

Le module 108 d'obtention est en outre agencé pour enregistrer dans le tableau l'ensemble de flux de données autorisés obtenus en association avec un ou des identifiants de l'utilisateur.

Le module 104 relais de la signalisation multicast est en outre agencé pour recevoir une demande d'accès à un flux de données multicast, commander le module 106 de traitement pour recevoir en retour une autorisation de transmission ou non de la demande d'accès et pour relayer la demande d'accès en cas d'autorisation.

Dans un mode de réalisation particulier, le dispositif d'accès comprend les deux entités telles que décrites précédemment. La première entité 12 est agencée pour relayer des messages relatifs à la session applicative et la deuxième entité 14 est agencée pour relayer des messages relatifs à un protocole de signalisation multicast.

La première entité 12 comprend alors les modules 102 relais de signalisation relative à la session et 108 d'obtention.

La deuxième entité 14 comprend alors les modules 104 relais de la signalisation multicast, 106 de traitement d'une demande d'accès et le tableau 110.

Le dispositif de contrôle d'accès peut être intégré dans une passerelle d'accès au réseau de communication.

Les modules 102, 104, 106, 108 du dispositif de contrôle d'accès sont agencés pour mettre en oeuvre celles des étapes du procédé de contrôle d'accès précédemment décrit exécutées par le dispositif de contrôle d'accès. Il s'agit de préférence de modules logiciels comprenant des instructions logicielles pour faire exécuter celles des étapes du procédé de contrôle d'accès précédemment décrit, mises en oeuvre par un dispositif de contrôle d'accès. L'invention concerne donc aussi :
- un programme pour dispositif de contrôle d'accès, comprenant des instructions de programme destinées à commander l'exécution de celles des étapes du procédé de contrôle d'accès précédemment décrit qui sont exécutées par ledit dispositif, lorsque ledit programme est exécuté par un processeur de celui-ci ;
- un support d'enregistrement lisible par un dispositif de contrôle d'accès sur lequel est enregistré le programme pour dispositif de contrôle d'accès.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système d'accès à un flux de données diffusé, comprenant un dispositif d'accès par un utilisateur à un flux de données diffusé tel que décrit précédemment et au moins un équipement 32 du réseau, agencé pour diffuser ledit flux de données.

La description a été faite dans le cas particulier où la session applicative est établie à l'aide du protocole SIP. Le procédé est aisément transposable à un mode de réalisation, dans lequel la session applicative est ouverte à l'aide du protocole « http », pour « HyperText Transfer Protocol ». Une entité mandataire pour ce protocole « http » relatif à la session applicative obtient alors du message de réponse l'ensemble des chaînes autorisées pour l'utilisateur, tel que cela a été décrit précédemment pour le protocole SIP.

La description a également été faite dans le cas particulier où l'entité mandataire SIP 12 transmet deux identifiants de l'utilisateur à l'entité mandataire pour le protocole de signalisation multicast 14. D'autres modes de réalisations sont également envisageables, dans lesquels seul le premier identifiant de l'utilisateur, IMPU, est transmis et enregistré dans le tableau 110 en association avec la liste des chaînes autorisées. Dans ce cas, lorsque l'entité mandataire pour le protocole de signalisation multicast 14 reçoit un message de demande d'accès M6, M21, elle vérifie dans un premier temps que l'adresse IP fournie dans le message correspond bien à celle d'un terminal enregistré et obtient en retour le premier identifiant de l'utilisateur IMPU. Dans un deuxième temps, l'entité mandataire pour le protocole de signalisation multicast 14 utilise le premier identifiant obtenu pour obtenir la liste des chaînes TV autorisées.

La description a été faite à l'aide d'une liste de chaînes autorisées. Elle est aisément transposable à d'autres modes de réalisation, dans lesquels on extrait une liste de chaînes interdites d'un message relatif à une session applicative. Dans ce cas, la liste de chaînes autorisées est obtenue à partir de la liste des chaînes interdites.

## Revendications

1. Procédé de contrôle d'accès par un utilisateur (20, 22) à un flux de données diffusé dans un réseau de communication, ledit procédé comprenant les étapes suivantes mises en oeuvre par un dispositif d'accès (10, 100) par l'intermédiaire duquel l'utilisateur accède au réseau :
- obtention (F1) d'un ensemble de flux de données autorisés à partir d'un message reçu par le dispositif d'accès et à destination de l'utilisateur, ledit message étant relatif à une session applicative entre l'utilisateur et une plateforme de service (34) ;
- réception (F3) d'une demande d'accès de l'utilisateur audit flux de données ;
- vérification (F3) que le flux n'appartient pas à l'ensemble de flux de données autorisés obtenu pour ledit utilisateur ;
- rejet de la demande d'accès.

2. Procédé de contrôle d'accès selon la revendication 1, comprenant en outre une étape (F2) d'enregistrement dans un tableau dudit ensemble obtenu en association avec l'utilisateur.

3. Procédé de contrôle d'accès selon la revendication 2, comprenant en outre, sur réception d'un message de relâche de la session applicative, une étape (F5) de suppression du tableau de l'enregistrement associé à l'utilisateur.

4. Procédé de contrôle d'accès selon la revendication 1, comprenant en outre les étapes suivantes :
- réception d'une demande d'arrêt de diffusion d'un flux de données ;
- vérification que le flux n'appartient pas à l'ensemble de flux de données autorisés obtenu pour ledit utilisateur ;
- rejet de la demande d'arrêt.

5. Dispositif (10, 100) d'accès par un utilisateur à un flux de données diffusé dans un réseau de communication, agencé pour permettre un accès de l'utilisateur au réseau :
- des moyens (108) d'obtention d'un ensemble de flux de données autorisés à partir d'un message reçu par le dispositif d'accès et à destination de l'utilisateur, ledit message étant relatif à une session applicative entre l'utilisateur et une plateforme de service ;
- des moyens (104) de réception d'une demande d'accès de l'utilisateur audit flux de données ;
- des moyens (106) de traitement de la demande d'accès, agencés pour rejeter la demande d'accès lorsque le flux n'appartient pas à l'ensemble de flux de données autorisés pour ledit utilisateur.

6. Passerelle d'accès à un réseau de communication pour au moins un utilisateur, comprenant un premier module (12), agencé pour relayer des messages relatifs à la session applicative, et un deuxième module (14), agencé pour relayer des messages relatifs à un protocole de signalisation multicast, dans laquelle :
- le premier module est en outre agencé pour obtenir un ensemble de flux de données autorisés à partir d'un message reçu par le dispositif d'accès et à destination de l'utilisateur, ledit message étant relatif à une session applicative entre l'utilisateur et une plateforme de service ;
- le deuxième module est en outre agencé pour recevoir une demande d'accès de l'utilisateur à un flux de données diffusé dans le réseau, pour vérifier que le flux n'appartient pas à l'ensemble de flux de données autorisés pour ledit utilisateur et pour rejeter la demande d'accès.

7. Système d'accès à un flux de données diffusé, comprenant un dispositif d'accès par un utilisateur à un flux de données diffusé selon la revendication 5 et au moins un équipement du réseau, agencé pour diffuser ledit flux de données.

8. Programme d'ordinateur comportant des instructions pour la mise en oeuvre du procédé de contrôle d'accès selon la revendication 1, mises en oeuvre par un dispositif d'accès, lorsque ce programme est exécuté par un processeur.

## Patentansprüche

1. Verfahren zur Kontrolle des Zugriffs durch einen Benutzer (20, 22) · auf einen in einem Kommunikationsnetz verbreiteten Datenstrom, wobei das Verfahren die folgenden Schritte enthält, die von einer Zugriffsvorrichtung (10, 100) durchgeführt werden, mittels der der Benutzer auf das Netz zugreift:
- Erhalt (F1) einer Einheit von genehmigten Datenströmen ausgehend von einer von der Zugriffsvorrichtung empfangenen und für den Benutzer bestimmten Mitteilung, wobei die Mitteilung sich auf eine Anwendungssitzung zwischen dem Benutzer und einer Dienstplattform (34) bezieht;
- Empfang (F3) einer Zugriffsanforderung des Benutzers auf den Datenstrom;
- Überprüfung (F3), dass der Strom nicht zu der Einheit von genehmigten Datenströmen gehört, die für den Benutzer erhalten wurde;
- Zurückweisung der Zugriffsanforderung.

2. Zugriffskontrollverfahren nach Anspruch 1, das außerdem einen Schritt (F2) der Registrierung in einer Tabelle der Einheit enthält, die in Verbindung mit dem Benutzer erhalten wurde.

3. Zugriffskontrollverfahren nach Anspruch 2, das außerdem bei Empfang einer Mitteilung der Unterbrechung der Anwendungssitzung einen Schritt (F5) des Löschens der dem Benutzer zugeordneten Registrierung aus der Tabelle enthält.

4. Zugriffskontrollverfahren nach Anspruch 1, das außerdem die folgenden Schritte enthält:
- Empfang einer Anforderung des Anhaltens der Verbreitung eines Datenstroms;
- Überprüfung, dass der Datenstrom nicht zu der Einheit von genehmigten Datenströmen gehört, die für den Benutzer erhalten wurde;
- Zurückweisung der Anhalteanforderung.

5. Vorrichtung (10, 100) für den Zugriff durch einen Benutzer auf einen in einem Kommunikationsnetz verbreiteten Datenstrom, die eingerichtet ist, um einen Zugriff des Benutzers auf das Netz zu erlauben:
- Einrichtungen (108) zum Erhalt einer Einheit von genehmigten Datenströmen ausgehend von einer von der Zugriffsvorrichtung empfangenen und für den Benutzer bestimmten Mitteilung, wobei die Mitteilung sich auf eine Anwendungssitzung zwischen dem Benutzer und einer Dienstplattform bezieht;
- Einrichtungen (104) zum Empfang einer Zugriffsanforderung des Benutzers auf den Datenstrom;
- Einrichtungen (106) zur Verarbeitung der Zugriffsanforderung, die eingerichtet sind, um die Zugriffsanforderung zurückzuweisen, wenn der Strom nicht zu der Einheit von für den Benutzer genehmigten Datenströmen gehört.

6. Zugriffs-Gateway auf ein Kommunikationsnetz für mindestens einen Benutzer, das ein erstes Modul (12), das eingerichtet ist, um Mitteilungen bezüglich der Anwendungssitzung weiterzuleiten, und ein zweites Modul (14) enthält, das eingerichtet ist, um Mitteilungen bezüglich eines Multicast-Signalisierungsprotokolls weiterzuleiten, wobei:
- das erste Modul außerdem eingerichtet ist, um eine Einheit von genehmigten Datenströmen ausgehend von einer von der Zugriffsvorrichtung empfangenen und für den Benutzer bestimmten Mitteilung zu erhalten, wobei die Mitteilung sich auf eine Anwendungssitzung zwischen dem Benutzer und einer Dienstplattform bezieht;
- das zweite Modul außerdem eingerichtet ist, um eine Zugriffsanforderung des Benutzers auf einen im Netz verbreiteten Datenstrom zu empfangen, um zu überprüfen, dass der Strom nicht zu der Einheit von für den Benutzer genehmigten Datenströmen gehört, und um die Zugriffsanforderung zurückzuweisen.

7. Zugriffssystem auf einen verbreiteten Datenstrom, das eine Zugriffsvorrichtung durch einen Benutzer auf einen verbreiteten Datenstrom nach Anspruch 5 und mindestens eine Ausrüstung des Netzes enthält, eingerichtet, um den Datenstrom zu verbreiten.

8. Computerprogramm, das Anweisungen zur Durchführung des Zugriffskontrollverfahrens nach Anspruch 1 aufweist, die von einer Zugriffsvorrichtung durchgeführt werden, wenn dieses Programm von einem Prozessor ausgeführt wird.

## Claims

1. Method for controlling access by a user (20, 22) to a data stream broadcast in a communication network, said method comprising the following steps implemented by an access device (10, 100) by means of which the user accesses the network:
- obtaining (F1) a set of authorized data streams from a message received by the access device and for the user, said message relating to an application session between the user and a service platform (34);
- receiving (F3) a request from the user to access said data stream;
- checking (F3) that the stream does not belong to the set of authorized data streams obtained for said user;
- rejecting the access request.

2. Method for controlling access according to Claim 1, moreover comprising a step (F2) of recording said obtained set in a table in association with the user.

3. Method for controlling access according to Claim 2, moreover comprising, on reception of a closure message for the application session, a step (F5) of deleting the recording associated with the user from the table.

4. Method for controlling access according to Claim 1, moreover comprising the following steps:
- receiving a request to stop broadcasting a data stream;
- checking that the stream does not belong to the set of authorized data streams obtained for said user;
- rejecting the stop request.

5. Device (10, 100) for a user to access a data stream broadcast in a communication network, designed to allow the user to access the network:
- means (108) for obtaining a set of authorized data streams from a message received by the access device and for the user, said message relating to an application session between the user and a service platform;
- means (104) for receiving a request from the user to access said data stream;
- means (106) for processing the access request, designed to reject the access request when the stream does not belong to the set of authorized data streams for said user.

6. Gateway for at least one user to access a communication network, comprising a first module (12), designed to relay messages relating to the application session, and a second module (14), designed to relay messages relating to a multicast signalling protocol, in which:
- the first module is moreover designed to obtain a set of authorized data streams from a message received by the access device and for the user, said message relating to an application session between the user and a service platform;
- the second module is moreover designed to receive a request from the user to access a data stream broadcast in the network, to check that the stream does not belong to the set of authorized data streams for said user and to reject the access request.

7. System for accessing a broadcast data stream, comprising a device for a user to access a broadcast data stream according to Claim 5 and at least one device of the network, designed to broadcast said data stream.

8. Computer program having instructions for implementing the method for controlling access according to Claim 1, said instructions being implemented by an access device, when this program is executed by a processor.
